# EUROPÄISCHE PATENTSCHRIFT

(11) **EP 2 102 053 B1**
(45) Veröffentlichungstag und Bekanntmachung des Hinweises auf die Patenterteilung: **01.09.2010**
(21) Anmeldenummer: 07856262.6
(22) Anmeldetag: 26.11.2007
(51) Int. Cl.: B62D 15/02

(54) **PARKLENKASSISTENZSYSTEM MIT VERBESSERTER EIN- UND AUSSCHALTLOGIK**
PARKING STEERING ASSISTANCE SYSTEM WITH IMPROVED ACTIVATION AND DEACTIVATION LOGIC
SYSTÈME D'ASSISTANCE AU STATIONNEMENT DOTÉ D'UNE LOGIQUE AMÉLIORÉE DE BRANCHEMENT ET DE DÉBRANCHEMENT

(30) Priorität: 05.12.2006 DE 102006057230
(43) Veröffentlichungstag der Anmeldung: 23.09.2009
(73) Patentinhaber: VOLKSWAGEN AG, 38436 Wolfsburg (DE)
(72) Erfinder: SCHÖNING, Volkmar, 30900 Wedemark (DE); WUTTKE, Ulrich, 38126 Braunschweig (DE); SCHWITTERS, Frank, 38154 Königslutter (DE)
(86) Internationale Anmeldenummer: PCT/EP2007/010245
(87) Internationale Veröffentlichungsnummer: WO 2008/067927

(56) Entgegenhaltungen:
- EP-A- 0 952 460
- EP-A- 1 626 383
- DE-A1- 10 257 722
- DE-A1-102004 035 537
- DE-A1-102004 055 371
- DE-C1- 19 806 150

## Beschreibung

Die Erfindung betrifft ein Verfahren zum Betreiben eines Parklenkassistenzsystems und ein Parklenkassistenzsystem mit verbesserter Ein- und Ausschaltlogik, wobei das Parklenkassistenzsystem einem Fahrer Assistenzfunktionen und/oder Dienste im Zusammenhang mit einem Ein- und/oder Ausparken eines Kraftfahrzeugs zur Verfügung stellt. Das Parklenkassistenzsystem umfasst eine Ein- und Ausschaltlogik, die vorgesehen ist in Abhängigkeit eines Signals eines Bedienelements das Parklenkassistenzsystem in einen aktivierten Zustand zu versetzen und in Abhängigkeit eines Geschwindigkeitswerts (v) des Kraftfahrzeugs und abhängig von einem vorgegebenen ersten Geschwindigkeitsschwellenwert (SW1) das Parklenkassistenzsystem in einen deaktivierten Zustand zu versetzen.

Parklenkassistenzsysteme gehören zu einer Gruppe von Fahrassistenzsystemen, die zunehmend in Fahrzeugen zur Erhöhung eines Komforts und/oder zur Verbesserung der Sicherheit eingesetzt werden. Einfachste Fahrerassistenzsysteme sind beispielsweise ein Antiblockiersystem (ABS-System), welches ein Blockieren von Fahrzeugrädern beim Bremsen verhindert. Andere Fahrerassistenzsysteme umfassen beispielsweise ein elektronisches Stabilitätsprogramm (ESP-System), welches in kritischen Fahrsituationen einzelne Räder gezielt abbremst, um eine Spurtreue eines Fahrzeugs zu erhalten, d.h. ein Ausbrechen des Fahrzeugs zu verhindern.

Parklenkässistenzsysteme gehören ebenfalls zu den Fahrerassistenzsystemen, die in Kraftfahrzeugen vermehrt eingesetzt-werden. In einer einfachen Ausführungsform sorgt ein Parklenkassistenzsystem dafür, dass die Umgebung des Fahrzeugs mit Hilfe von Sensoren nach Hindernissen und/oder Freiräumen abgesucht wird. Vorzugsweise wird eine Umgebungskarte erstellt, die auf einer Anzeigevorrichtung Hindernisse und Freiflächen in der Umgebung des Fahrzeugs anzeigt. Bei einer besonders einfachen Ausführungsform erfolgt die Darstellung in Form von mehreren Leuchtelementen, die repräsentativ für einen Abstand des Fahrzeugs von einem Hindernis sind.

Unterschreitet das Fahrzeug einen vorgegebenen Grenzabstand, so wird eine haptische, akustische und/oder visuelle Warnung an den Fahrer ausgegeben. Weiterentwickelte Parklenkassistenzsysteme sind in der Lage, Parklücken selbständig zu erfassen und zu vermessen, eine Einparktrajektorie für das Fahrzeug in die ermittelte Parklücke zu berechnen und sogar das Fahrzeug selbständig automatisch in die Parklücke einzuparken.

Aus der WO 2005/100134 A1 ist ein solches Parklenkassistenzsystem bekannt, bei dem vorgesehen ist, dass das Parklenkassistenzsystem deaktiviert wird, wenn eine Sicherheitsüberprüfung ergeben hat, dass ein Einparkvorgang nicht sicher ausgeführt werden kann. Bei der Sicherheitsüberprüfung werden u.a. überprüft, ob das Parklenkassistenzsystem fehlerfrei arbeitet, d.h. keine Fehlermeldung liefert, ob ein Lenkaktuator fehlerfrei arbeitet, d.h. keinen Fehler meldet, ob das Kommunikationssystem zwischen dem Parklenkassistenzsystem und dem Lenkaktuator fehlerfrei arbeitet, d.h. keinen Fehler aufweist, und ob eine Anforderung eines automatischen Lenkeingriffs vorliegt.

Aus der EP 1 626 383 A2 ist ein Verfahren und eine Vorrichtung zur Unterstützung eines Rangierens eines Kraftfahrzeugs bekannt. Die Vorrichtung und das Verfahren sind vorgesehen, um den Komfort und die Sicherheit beim langsamen Annähern eines Fahrzeugs an ein Hindernis, wie dies beispielsweise beim Einparken auftritt, zu erhöhen. Dies wird dadurch erreicht, dass vorgeschlagen ist, in einem Rangiermodus bei Unterschreitung eines vorgegebenen Abstands des Kraftfahrzeugs zu einem Hindernis die Kupplung mindestens teilweise zu öffnen. Als Eintrittskriterium, das eine automatische Aktivierung des Rangiermodus bewirkt, ist ein Unterschreiten einer Fahrzeuggeschwindigkeit unter eine vorgegebene Eintrittsgrenzgeschwindigkeit kombiniert mit einem Fahrpedalwinkel kleiner einem vorgegebenen Eintrittsgrenzwinkel vorgeschlagen.

Bei den bekannten Parklenkassistenzsystemen eingangs genannter Art ist vorgesehen, dass das Parklenkassistenzsystem über eine Betätigung eines Bedienelements aktiviert werden kann. Da eine Genauigkeit, beispielsweise bei einer Vermessung der Umgebung zum Auffinden von Parklücken, von der Fahrzeuggeschwindigkeit abhängig ist, ist bei den bekannten System vorgesehen, dass das Parklenkassistenzsystem deaktiviert wird, wenn ein Geschwindigkeitswert des Fahrzeugs einen ersten Geschwindigkeitsschwellenwert überschreitet. Dieser Ausgestaltung liegt die Annahme zugrunde, dass ein Fahrer mit seinem Fahrzeug nach dem Aktivieren des Parklenkassistenzsystems sich mit einer relativ geringen Fahrzeuggeschwindigkeit einer möglichen Parklücke nähern wird. Der erste Geschwindigkeitsschwellenwert ist in der Praxis zumeist bei 30 km/h festgelegt.
Überschreitet die Fahrzeuggeschwindigkeit diesen ersten Geschwindigkeitsschwellenwert, beispielsweise 30 km/h, so wird das Parklenkassistenzsystem deaktiviert. Da es Situationen gibt, in denen ein Fahrer ohne seine Parkplatzsuche oder Parkplatzannäherungsabsicht aufzugeben seine Fahrzeuggeschwindigkeit u. U. über 30 km/h erhöhen muss, d.h. über den ersten Geschwindigkeitsschwellenwert, ist es unbefriedigend, dass er das Parklenkassistenzsystem manuell erneut aktivieren muss, nachdem er die Fahrzeuggeschwindigkeit unter den ersten Geschwindigkeitsschwellenwert erneut abgesenkt hat.

Der Erfindung liegt daher das technische Problem zugrunde, ein Parklenkassistenzsystem und ein Verfahren zum Betreiben eines Parklenkassistenzsystems zu schaffen, die hinsichtlich des Ein- und Ausschaltens des Parklenkassistenzsystems einen höheren Komfort bieten.

Die Lösung des technischen Problems ergibt sich aus einem Parklenkassistenzsystem mit den Merkmalen des Patentanspruchs 1 und ein Verfahren zum Betreiben eines Parklenkassistenzsystems mit den Merkmalen des Patentanspruchs 6. Weitere vorteilhafte Ausgestaltungen der Erfindung ergeben sich aus den Unteransprüchen.

Hierfür ist vorgesehen, dass zusätzlich zu dem aktivierten Zustand und dem deaktivierten Zustand ein temporär deaktivierter Zustand des Parklenkassistenzsystems geschaffen wird. Ferner wird ein zweiter Geschwindigkeitsschwellenwert vorgegeben, der geringer als der erste Geschwindigkeitsschwellenwert ist. In Abhängigkeit von einem Größenvergleich der Fahrzeuggeschwindigkeit mit dem zweiten Geschwindigkeitsschwellenwert kann das Parklenkassistenzsystem aus dem aktivierten Zustand in den temporär deaktivierten Zustand oder aus dem temporär deaktivierten Zustand in den aktivierten Zustand versetzt werden. Ein Deaktivieren erfolgt erst bei einer höheren Fahrzeuggeschwindigkeit.

Insbesondere wird ein Parklenkassistenzsystem mit einer verbesserten Ein- und Ausschaltlogik vorgeschlagen, wobei das Parklenkassistenzsystem einem Fahrer Assistenzfunktionen und/oder Dienste im Zusammenhang mit einem Ein- und/oder Ausparken eines Kraftfahrzeugs zur Verfügung stellt, umfassend die Ein- und Ausparklogik, die vorgesehen ist, in Abhängigkeit eines Signals eines Bedienelementes das Parklenkassistenzsystem in einen aktivierten Zustand zu versetzen und in Abhängigkeit eines Geschwindigkeitswerts des Kraftfahrzeugs und abhängig von einem vorgegebenen ersten Geschwindigkeitsschwellenwert das Parklenkassistenzsystem in einen deaktivierten Zustand zu versetzen, wobei ein vorgegebener zweiter Geschwindigkeitsschwellenwert existiert, der geringer als der erste Geschwindigkeitsschwellenwert ist, und die Ein- und Ausschaltlogik ausgestaltet ist, das Parklenkassistenzsystem in Abhängigkeit von einem Größenvergleich des Geschwindigkeitswerts und des zweiten Geschwindigkeitsschwellenwerts aus dem aktivierten Zustand in einen temporär deaktivierten Zustand oder aus dem temporär deaktivierten Zustand in den aktivierten Zustand zu versetzen.

Ein Verfahren zum Betreiben eines solchen Parklenkassistenzsystems mit einer Ein- und Ausschaltlogik umfasst die Verfahrensschritte: Erfassen eines Bediensignals und Versetzen des Parklenkassistenzsystems in einen aktivierten Zustand bei Empfang des Bediensignals, Empfangen eines Geschwindigkeitssignals, das einen Geschwindigkeitswert des Kraftfahrzeug repräsentiert, Vergleichen des Geschwindigkeitswerts mit einem vorgegebenen ersten Geschwindigkeitsschwellenwert und Versetzen des Parklenkassistenzsystems in Abhängigkeit des Vergleichsergebnisses in einen deaktivierten Zustand, wobei ein vorgegebener zweiter Geschwindigkeitsschwellenwert existiert, der geringer als der erste Geschwindigkeitsschwellenwert ist, und die Ein- und Ausschaltlogik mit dem Geschwindigkeitswert und dem zweiten Geschwindigkeitswert einen Größenvergleich ausführt und das Parklenkassistenzsystem in Abhängigkeit des Größenvergleichs aus dem aktivierten Zustand in einen temporär deaktivierten Zustand oder aus dem temporär deaktivierten Zustand in den aktivierten Zustand versetzt.

Hierdurch wird erreicht, dass der zweite Geschwindigkeitsschwellenwert so festgelegt werden kann, dass bei einer Fahrzeuggeschwindigkeit unterhalb des zweiten Geschwindigkeitsschwellenwerts eine optimale Funktion des Parklenkassistenzsystems gewährleistet ist und das einmal aktivierte Parklenkassistenzsystem in dem Fall, in dem die Fahrt den zweiten Geschwindigkeitsschwellenwert nur kurzfristig überschreitet, nach dem Unterschreiten erneut automatisch aktiviert wird. Erst bei einem Überschreiten des ersten Geschwindigkeitsschwellenwerts, der größer als der zweite Geschwindigkeitsschwellenwert ist, wird das Parklenkassistenzsystem vollständig deaktiviert. Hierdurch wird für den Fahrer ein höherer Komfort geschaffen, der während einer Parkplatzsuche kurzfristig seine Geschwindigkeit über den zweiten Geschwindigkeitsschwellenwert anhebt.

Bewegt sich das Fahrzeug mit einer Geschwindigkeit, die um die Geschwindigkeit schwankt, die dem zweiten Geschwindigkeitsschwellenwert entspricht, so wird das Parklenkassistenzsystem von der Ein- und Ausschaltlogik in kurzen Zeitabständen alternierend in den aktivierten und in den temporär deaktivierten Zustand versetzt. Wird beispielsweise im aktivierten Zustand eine Umgebung des Kraftfahrzeugs, die mittels Sensoren erfasst ist, angezeigt und diese Anzeige im temporär deaktivierten Zustand abgeschaltet, so stellt sich in einem solchen Fall ein "Flattern" der Anzeige ein. Um diesen Zustand zu vermeiden, ist bei einer bevorzugten Ausführungsform der Erfindung vorgesehen, dass ein vorgegebener dritter Geschwindigkeitsschwellenwert existiert, der geringer als der zweite Geschwindigkeitsschwellenwert ist, und die Ein- und Ausschaltlogik ausgestaltet ist, das Parklenkassistenzsystem aus dem temporär deaktivierten Zustand in den aktivierten Zustand nur zu versetzen, wenn der Geschwindigkeitswert auch kleiner als der dritte Geschwindigkeitsschwellenwert ist. Hierdurch wird eine Hysterese in Abhängigkeit von der Fahrzeuggeschwindigkeit bzw. des Geschwindigkeitswerts für ein Umschalten zwischen dem aktivierten Zustand und dem temporär deaktivierten Zustand geschaffen.

Es hat sich ferner gezeigt, dass es einen Geschwindigkeitsbereich gibt, in dem zwar eine Vermessung der Umgebung mit Sensoren keine ausreichende Genauigkeit für eine exakte Vermessung der Umgebung mehr liefern, dass jedoch eine eingeschränkte Funktionalität von dem Parklenkassistenzsystem zur Komfortsteigerung für einen Fahrer immer noch zur Verfügung gestellt werden kann. Dieses kann beispielsweise ein Anzeigen eines bereits exakt vermessenen Umgebungsbereichs des Kraftfahrzeugs umfassen. Bei einer weiteren Ausführungsform der Erfindung ist somit vorgesehen, dass ein vorgegebener vierter Geschwindigkeitsschwellenwert existiert, der geringer als der zweite Geschwindigkeitsschwellenwert ist, und die Ein- und Ausschaltlogik ausgestaltet ist, das Parklenkassistenzsystem aus dem aktivierten Zustand in einen eingeschränkt aktivierten Zustand zu versetzen, wenn der Geschwindigkeitswert den vierten Geschwindigkeitsschwellenwert erreicht oder überschreitet. Bei dieser Ausführungsform wird ferner erreicht, dass die Geschwindigkeitsschwelle, bei der das Parklenkassistenzsystem in den temporär deaktivierten Zustand versetzt wird, über die Geschwindigkeit angehoben ist, bis zu der eine einwandfreie und optimale Funktionsweise des Parklenkassistenzsystems gewährleistet ist. Hierdurch ist es folglich bei Ausführungsformen der Erfindung, bei denen ein Versetzen des Parklenkassistenzsystems in den temporär deaktivierten Zustand hystereseartig ausgebildet ist, möglich, die Geschwindigkeitsschwelle, bei der das Parklenkassistenzsystem aus dem temporär deaktivierten Zustand in den aktivierten Zustand (zurück) versetzt wird, anzuheben.

Bei einer besonders bevorzugten Ausführungsform fallen der dritte Geschwindigkeitsschwellenwert und der vierte Geschwindigkeitsschwellenwert zusammen. Dies bedeutet, dass ein Übergang aus dem aktivierten Zustand in den eingeschränkt aktivierten Zustand bei einem Überschreiten des Geschwindigkeitsschwellenwerts eintritt, bei dessen Unterschreitung ein Versetzen des Parklenkassistenzsystems aus dem temporär deaktivierten Zustand in den aktivierten Zustand erfolgt. Die Geschwindigkeitsschwelle, bei der ein Wechsel zwischen dem aktivierten Zustand und dem eingeschränkt aktivierten Zustand erfolgt, könnte ebenfalls hystereseartig ausgestaltet werden. Dieses ist jedoch in der Regel nicht erforderlich, da die eingeschränkte Funktionalität gerade so gewählt werden kann, dass für einen Fahrer keine unangenehmen, wahrnehmbaren Umschaltprozesse vorgesehen sind, die bei einem Bewegen des Fahrzeugs mit Geschwindigkeiten auftreten, die um diese Geschwindigkeitsschwelle schwanken. So bleibt beispielsweise die Anzeige der ermittelten Umgebung eingeschaltet. Die mit den Sensoren erfassten Informationen der Umgebung werden jedoch als nicht vertrauenswürdig eingestuft, wenn das Parklenkassistenzsystem im eingeschränkt aktivierten Zustand ist. Es ist ebenso möglich, die Sensoren im eingeschränkt aktivierten Zustand abzuschalten.

Wie bereits oben erläutert gibt es Situationen, bei denen ein Fahrer das Fahrzeug einparken möchte und das Parklenkassistenzsystem aktiviert hat und dennoch sein Fahrzeug kurzzeitig mit einer höheren Fahrzeuggeschwindigkeit bewegen muss oder will. Dies tritt beispielsweise auf, wenn ein Fahrer, der einen Parkplatz an einem Fahrbahnrand sucht, einen Kreuzungsbereich überfahren muss, in dem naturgemäß keine Parkplätze vorhanden sein können. Diesen Kreuzungsbereich wird der Fahrer in zügiger Fahrt durchfahren. Hierbei kann es vorkommen, dass der Fahrer die Fahrzeuggeschwindigkeit so weit anhebt, dass der Geschwindigkeitswert des Fahrzeugs oberhalb des ersten Geschwindigkeitsschwellenwerts liegt, was zu einem Abschalten, d.h. vollständigen Deaktivieren, des Parklenkassistenzsystems führt. Um dieses zu vermeiden, ist bei einer besonders bevorzugten Ausführungsform der Erfindung vorgesehen, dass ein vorgegebenes erstes Zeitintervall existiert und die Ein- und Ausschaltlogik ausgestaltet ist, das Versetzen in den deaktivierten Zustand nur vorzunehmen, wenn der Geschwindigkeitswert den ersten Geschwindigkeitsschwellenwert während einer Zeitspanne überschreitet, die länger als das erste Zeitintervall ist. Die ermittelte Zeitspanne gibt somit an, wie lange das Kraftfahrzeug ununterbrochen bei einer Geschwindigkeit bewegt wird, die oberhalb des ersten Geschwindigkeitsschwellenwerts liegt.

Wird das Parklenkassistenzsystem zum Ausparken aus einer Parklücke verwendet, so ist es wünschenswert, dass das Parklenkassistenzsystem automatisch abgeschaltet wird, wenn der Fahrer das Fahrzeug nach dem Ausparken in zügiger Fahrt im Straßenverkehr bewegt. Dieses wird immer dann erreicht, wenn der erste Geschwindigkeitsschwellenwert überschritten wird, gegebenenfalls für die vorgegebene Zeitspanne, die größer als das erste Zeitintervall ist.

Die Funktionalität des Parklenkassistenzsystems steht dem Fahrer jedoch bereits ab dem Zeitpunkt nicht mehr zur Verfügung, ab dem der Geschwindigkeitswert den zweiten Geschwindigkeitsschwellenwert überschritten hat. Besonders im Stadtverkehr können Situationen eintreten, in denen der Fahrer das Fahrzeug mit einer Geschwindigkeit bewegt, die oberhalb des zweiten Geschwindigkeitsschwellenwertes ist, jedoch den ersten Geschwindigkeitsschwellenwert zunächst nicht überschreitet. Um ein erneuten Wechsel aus dem temporär deaktivierten Zustand in den aktivierten Zustand oder eingeschränkt aktivierten Zustand zu vermeiden, ist bei einer weiteren Ausführungsform der Erfindung vorgesehen, dass ein vorgegebenes zweites Zeitintervall existiert und die Ein- und Ausschaltlogik ausgestaltet ist, dass das Versetzen aus dem temporär deaktivierten Zustand in den aktivierten Zustand oder eingeschränkt aktivierten Zustand nur erfolgt, wenn der Geschwindigkeitswert den zweiten Geschwindigkeitsschwellenwert oder, sofern der dritte Geschwindigkeitsschwellenwert existiert, auch der dritte Geschwindigkeitsschwellenwert für eine weitere Zeitspanne unterschritten werden, die länger als das zweite Zeitintervall ist. Wird das Kraftfahrzeug in einer solchen Ausparksituation zunächst nur bei einer Geschwindigkeit bewegt, die lediglich ein Versetzen in den temporär deaktivierten Zustand des Parklenkassistenzsystems bewirkt, und anschließend erneut bei einer geringeren Geschwindigkeit bewegt, die "eigentlich" ein Versetzen in den aktivierten Zustand bewirken würde, kann das Fahrzeug für eine weitere Zeitspanne, die geringer als das zweite Zeitintervall ist, bewegt werden, ohne dass das Parklenkassistenzsystem erneut in den aktivierten Zustand versetzt wird.

Die Merkmale der weiteren Ausführungsformen des erfindungsgemäßen Verfahrens weisen dieselben Vorteile wie die entsprechenden Merkmale des Parklenkassistenzsystems auf.

Nachfolgend wird die Erfindung anhand bevorzugter Ausführungsformen näher erläutert. Hierbei zeigen:
- Fig. 1: eine grafische Darstellung einer gegen die Zeit aufgetragenen Fahrzeuggeschwindigkeit sowie eine Tabelle zum Veranschaulichen des Ein- und Ausschaltens eines Parklenkassistenzsystems nach dem Stand der Technik;
- Fig. 2 bis 6: jeweils eine grafische Darstellung der gegen die Zeit aufgetragenen Fahrzeuggeschwindigkeit sowie eine Tabelle zur Veranschaulichung des Umschaltens zwischen unterschiedlichen Betriebszuständen bei verschiedenen Ausführungsformen eines Parklenkassistenzsystems sowie jeweils einer entsprechenden Tabelle zur Veranschaulichung des Umschaltens zwischen den verschiedenen Betriebszuständen; und
- Fig. 7: eine schematische Darstellung eines Parklenkassistenzsystems.

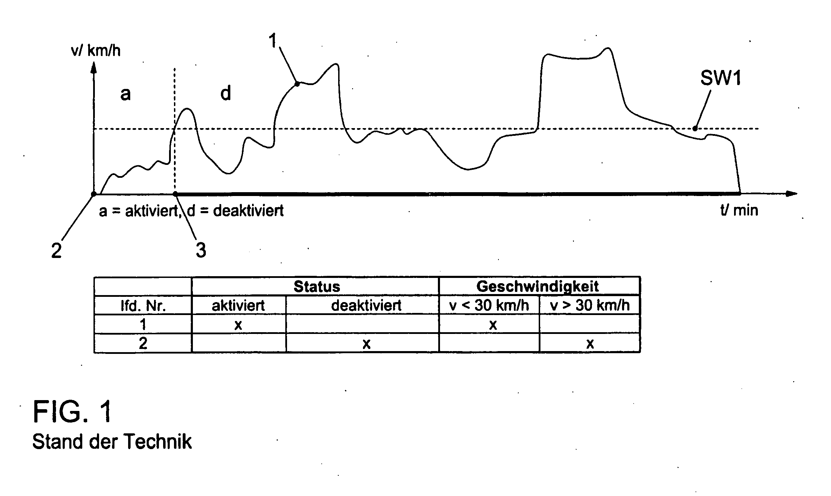

In Fig. 1 ist ein Geschwindigkeitswert v eines Kraftfahrzeugs als Kurve 1 grafisch gegen die Zeit aufgetragen. Zu einem Anfangszeitpunkt 2 ist oder wird ein Parklenkassistenzsystem in einen aktivierten Zustand versetzt. Zu einem Zeitpunkt 3 überschreitet die Fahrzeuggeschwindigkeit einen ersten Geschwindigkeitsschwellenwert SW1. Zu diesem Zeitpunkt wird das Parklenkassistenzsystem aus dem aktivierten in einen deaktivierten Zustand versetzt. Unabhängig davon, wie sich der Geschwindigkeitswert v des Kraftfahrzeugs mit fortschreitender Zeit entwickelt, bleibt das Parklenkassistenzsystem nach dem Stand der Technik in deaktiviertem Zustand.

In einem unteren Teil der Fig. 1 ist eine Tabelle dargestellt. In den einzelnen Zeilen der Tabelle sind unterschiedliche Fahrzustände aufgeführt. In einem Spaltenblock, der die Überschrift Status trägt, sind die unterschiedlichen möglichen Betriebszustände des Parklenkassistenten aufgeführt. In einem weiteren Spaltenblock, der die Überschrift Geschwindigkeit trägt, sind die unterschiedlichen Geschwindigkeitsbereiche aufgeführt, die zu den unterschiedlichen Betriebszuständen des Parklenkassistenten korrespondieren. Über Kreuze sind Korrelationen der Geschwindigkeiten mit den Betriebszuständen angezeigt.

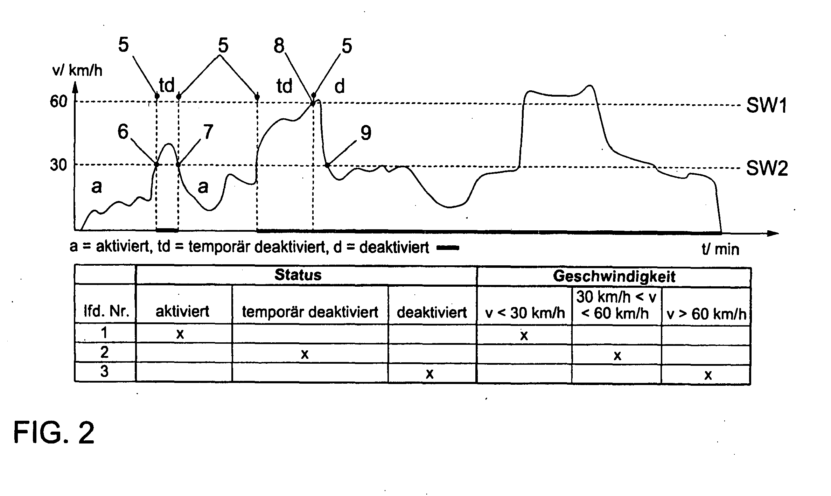

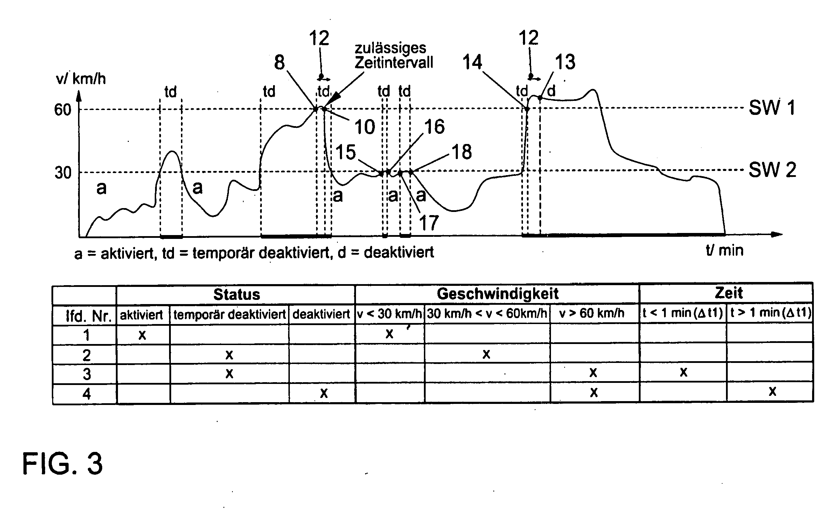

In Fig. 2 ist ebenfalls wie in den übrigen Fig. 3 bis 6 die Geschwindigkeit v eines Kraftfahrzeugs gegenüber der Zeit als Geschwindigkeitskurve 1 aufgetragen. In allen Fig. 1 bis 6 ist der Geschwindigkeitsverlauf identisch. In der grafischen Darstellung sind unterschiedliche Zeitabschnitte durch senkrechte Hilfslinien 5 begrenzt. Diese Hilfslinien 5 markieren jeweils einen Zeitpunkt, an dem die Geschwindigkeitskurve 1 einen Geschwindigkeitsschwellenwert überschreitet oder unterschreitet oder ein Zeitintervall begrenzt. Zeitabschnitten, die so abgegrenzt sind, ist jeweils über einen Buchstaben oder eine Buchstabenkombination eine Bezeichnung eines zugehörigen Betriebszustands des Parklenkassistenzsystems zugeordnet. Hierbei stehen "a" für aktiviert, "d" für deaktiviert, "td" für temporär deaktiviert und "ae" für eingeschränkt aktiviert.

Bei der Ausführungsform eines Parklenkassistenzsystems, die zu der grafischen Darstellung nach Fig. 2 korrespondiert, sind ein erster Geschwindigkeitsschwellenwert SW1 von 60 km/h und ein zweiter Geschwindigkeitsschwellenwert SW2 von 30 km/h vorgegeben. Befindet sich das Parklenkassistenzsystem in einem aktivierten Zustand und überschreitet der Geschwindigkeitswert v den zweiten Geschwindigkeitsschwellenwert SW2, wie dies beispielsweise an einem Zeitpunkt 6 der Fall ist, wo wird das Parklenkassistenzsystem aus dem aktivierten Zustand in einen temporär deaktivierten Zustand versetzt. Sinkt der Geschwindigkeitswert v des Kraftfahrzeugs erneut unter den zweiten Geschwindigkeitsschwellenwert SW2 ab, wie dies an dem einen Punkt 7 der Fall ist, so wird das Parklenkassistenzsystem erneut in den aktivierten Zustand versetzt. Überschreitet der Geschwindigkeitswert v jedoch zu irgend einem Zeitpunkt 8 den ersten Geschwindigkeitsschwellenwert SW1, so wird das Parklenkassistenzsystem in den deaktivierten Zustand versetzt. Auch nach einem Absinken des Geschwindigkeitswerts unter den zweiten Geschwindigkeitsschwellenwert SW2, wie dies beispielsweise an einem Punkt 9 eintritt, wird das Parklenkassistenzsystem nicht erneut in den aktivierten Zustand versetzt.

Das Parklenkassistenzsystem, das zu der grafischen Darstellung von Fig. 3 korrespondiert, ist so ausgestaltet, dass ein Deaktivieren des Pärklenkassistenzsystems nur eintritt, wenn der Geschwindigkeitswert v den ersten Geschwindigkeitsschwellenwert SW1 für eine Zeitspanne überschreitet, die größer als ein erstes Zeitintervall Δt1 ist. Eine Zeitspanne zwischen dem Zeitpunkt 8, an dem die Geschwindigkeitskurve 1 den ersten Geschwindigkeitsschwellenwert SW1 überschreitet, und einem Zeitpunkt 10, an dem die Geschwindigkeitskurve 1 den ersten Geschwindigkeitsschwellenwert SW1 erneut unterschreitet, ist in dem in Fig. 3 dargestellten Beispiel kürzer als das erste Zeitintervall Δt1, das mittels eines Doppelpfeils 12 dargestellt ist. An dem Zeitpunkt 9, an dem die Geschwindigkeitskurve den zweiten Geschwindigkeitsschwellenwert SW2 erneut unterschreitet, wird somit das korrespondierende Parklenkassistenzsystem aus dem temporär deaktivierten Zustand in den aktivierten Zustand versetzt. Erst zu einem Zeitpunkt 13 ist eine Zeitspanne seit einem Überschreiten des ersten Geschwindigkeitsschwellenwerts SW1 zu einem Zeitpunkt 14 vergangen, die dem ersten Zeitintervall Δt1, welches mittels eines Doppelpfeils 12 angedeutet ist, entspricht.

Erst an diesem Zeitpunkt 13 wird somit das Parklenkassistenzsystem in den deaktivierten Zustand versetzt.

Bei der dargestellten Ausführungsform ist zu erkennen, dass an den zeitlich kurz aufeinander folgenden Zeitpunkten 15, 16, 17, 18 jeweils ein Versetzen aus dem aktivierten Zustand in den temporär deaktivierten Zustand bzw. aus dem temporär deaktivierten Zustand in den aktivierten Zustand alternierend erfolgt. Dieses kann beispielsweise ein als unangenehm empfundenes "Flattern" einer Anzeige hervorrufen, sofern im aktivierten Zustand beispielsweise eine Umgebung des Kraftfahrzeugs angezeigt wird und diese im temporär deaktivierten Zustand abgeschaltet wird.

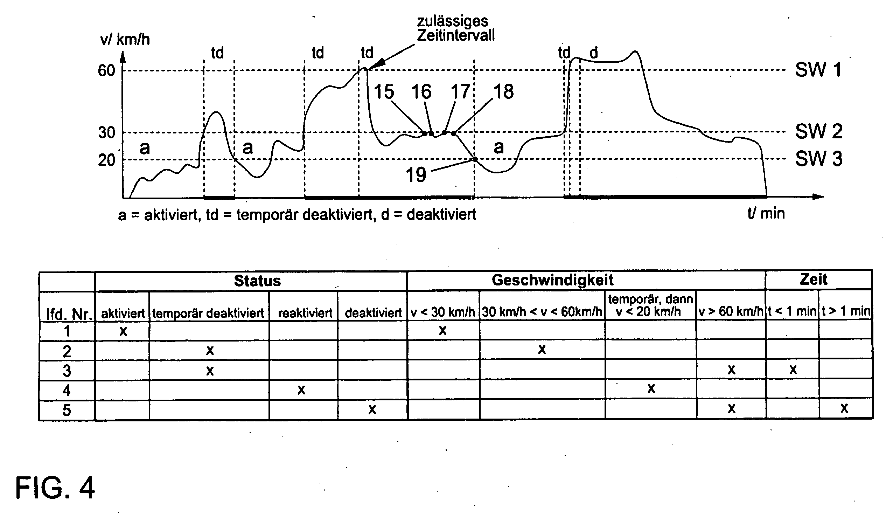

Bei einer Ausführungsform eines Parklenkassistenzsystems, die zu der Darstellung nach Fig. 4 korrespondiert, ist dieses Problem gelöst. Die entsprechende Ausführungsform des Parklenkassistenzsystems weist einen dritten Geschwindigkeitsschwellenwert SW3 auf. Dieser ist kleiner als der zweite Geschwindigkeitsschwellenwert SW2. Hierdurch wird erreicht, dass ein ständiges Umschalten zwischen dem aktivierten und temporär deaktivierten Zustand an den Zeitpunkten 15, 16, 17, 18 unterbleibt. Ein erneutes Versetzen in den aktivierten Zustand erfolgt erst zu einem Zeitpunkt 19, an dem die Geschwindigkeitskurve den dritten Geschwindigkeitsschwellenwert SW3 unterschreitet.

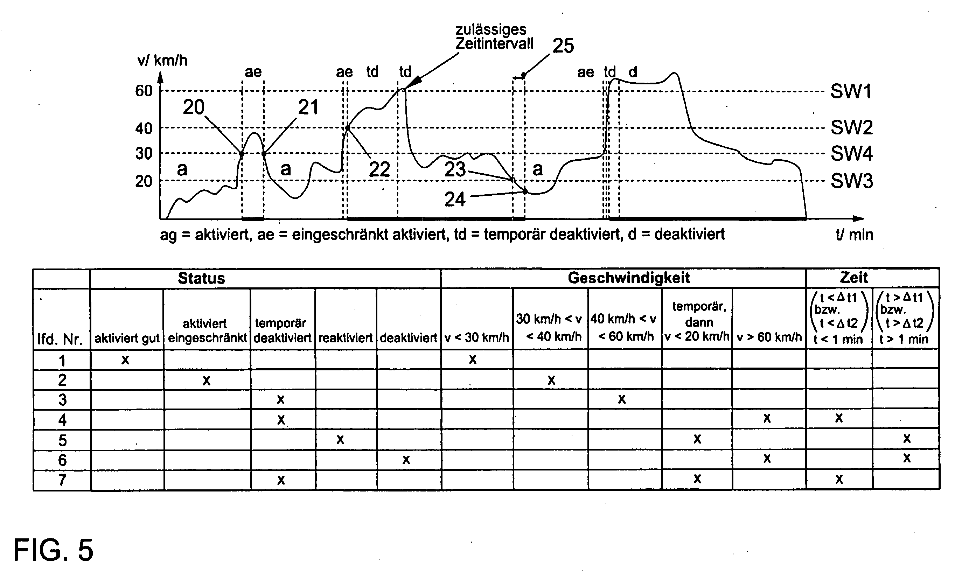

Die zu der Darstellung von Fig. 5 korrespondierende Ausführungsform eines Parklenkassistenzsystems ist so ausgestaltet, dass sie auch bei höheren Geschwindigkeiten, wenn auch eine eingeschränkte, Parklenkassistenzfunktionalität zur Verfügung stellt. Hierfür existiert bei der entsprechenden Ausführungsform ein vierter Geschwindigkeitsschwellenwert, der geringer als der zweite Geschwindigkeitsschwellenwert ist. Der vierte Geschwindigkeitsschwellenwert wird vorzugsweise so festgelegt, dass er mit dem Geschwindigkeitswert des Fahrzeugs zusammenfällt, bis zu dem eine uneingeschränkte Funktionalität des Parklenkassistenzsystems zur Verfügung gestellt werden kann. Dies bedeutet, dass bis zu dieser Geschwindigkeit beispielsweise eine Vermessung einer Umgebung des Fahrzeugs eine ausreichende Genauigkeit aufweist, um die so gewonnenen Informationen für ein automatisches Einparken des Kraftfahrzeuges verwenden zu können. Bei Geschwindigkeiten, die oberhalb des vierten Geschwindigkeitsschwellenwerts bis zu einem Erreichen des zweiten Geschwindigkeitsschwellenwerts liegen, ist vorgesehen, dass das Parklenkassistenzsystem eine eingeschränkte Funktionalität in einem eingeschränkt aktivierten Zustand zur Verfügung stellt. Beispielsweise kann die ermittelte Umgebung nach wie vor angezeigt werden. Eine Darstellung von Umgebungsbereichen, die bei einer Geschwindigkeit oberhalb des vierten Geschwindigkeitsschwellenwerts ermittelt worden sind, kann aber gänzlich unterbleiben oder in einer gekennzeichneten Weise dargestellt werden, die andeutet, dass die ermittelten und dargestellten Informationen über Hindernisse und Freiflächen nur eine begrenzte Aussagefähigkeit oder Zuverlässigkeit aufweisen.

Bei dieser Ausführungsform wird zu einem Zeitpunkt 20, an dem die Geschwindigkeitskurve 1 den vierten Geschwindigkeitsschwellenwert SW4 überschreitet, von dem aktivierten Zustand in den eingeschränkten aktivierten Zustand umgeschaltet. Zu einem Zeitpunkt 21, an dem die Geschwindigkeitskurve den vierten Geschwindigkeitsschwellenwert SW4 erneut unterschreitet, wird in den aktivierten Zustand zurückgewechselt. Der eingeschränkt aktivierte Zustand ist in der Grafik durch eine Buchstabenkombination ae von dem aktivierten Zustand unterschieden, der mit dem Buchstaben a gekennzeichnet ist. Der dritte Geschwindigkeitsschwellenwert SW3 ist bei dieser Ausführungsform kleiner als der vierte Geschwindigkeitsschwellenwert SW4. Ein Versetzen des Parklenkassistenzsystems in den temporär deaktivierten Zustand erfolgt an einem Zeitpunkt 22, zu dem die Geschwindigkeitskurve 1 den zweiten Geschwindigkeitsschwellenwert SW2 überschreitet. Bei dieser Ausführungsform findet ein Übergang in den aktivierten Zustand nicht zu einem Zeitpunkt 23 statt, an dem der Geschwindigkeitswert v, d.h. die Geschwindigkeitskurve 1, den dritten Geschwindigkeitsschwellenwert SW3 unterschreitet, sondern erst zu einem Zeitpunkt 24. Zwischen dem Zeitpunkt 23 und dem Zeitpunkt 24 ist eine weitere Zeitspanne vergangen, die größer als ein zweites Zeitintervall Δt2 ist, das mittels eines Doppelpfeils 25 angedeutet ist. Hierdurch kann insbesondere in Fahrsituationen, bei denen nach einem Ausparken das Fahrzeug nicht sofort auf eine Geschwindigkeit oberhalb des ersten Geschwindigkeitsschwellenwertes SW1 beschleunigt werden kann, ein erneutes Einschalten, d.h. Versetzen in den aktivierten Zustand des Parklenkassistenzsystems, verhindert werden, wenn die Fahrzeuggeschwindigkeit nur kurzfristig unter den dritten Geschwindigkeitsschwellenwert absinkt.

Die bei der zu der Fig. 5 gehörenden Ausführungsform gewählten Werte für den ersten Geschwindigkeitsschwellenwert SW1 von 60 km/h, für den zweiten Geschwindigkeitsschwellenwert SW2 von 40 km/h, den dritten Geschwindigkeitsschwellenwert SW3 von 20 km/h und den vierten Geschwindigkeitsschwellenwert SW4 von 30 km/h führen dazu, dass ein erneutes Aktivieren des Parklenkassistenzsystems, nachdem es in den temporär deaktivierten Zustand versetzt worden ist, bei einer zu geringen Geschwindigkeit erfolgt.

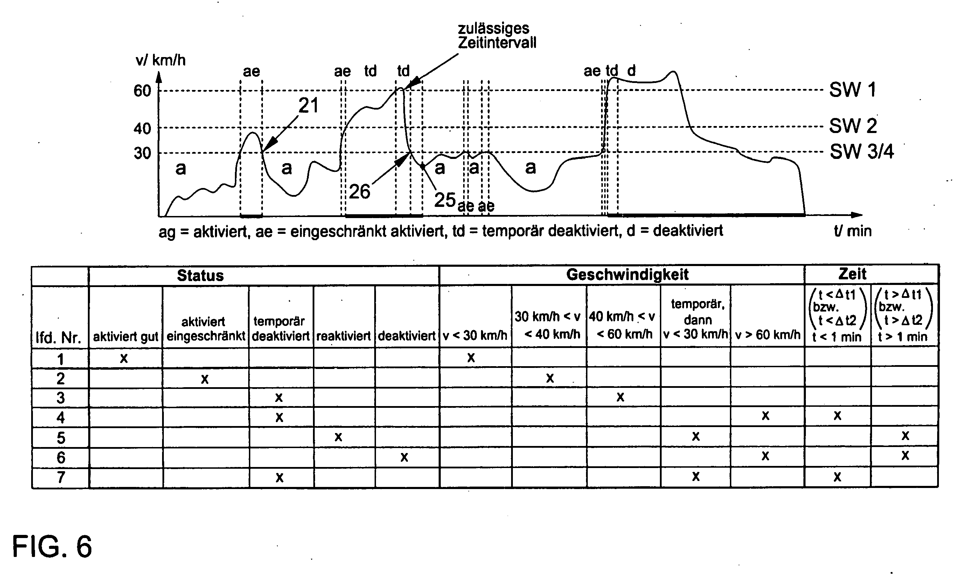

Bei einer bevorzugten Ausführungsform, die zu der grafischen Darstellung nach Fig. 6 korrespondiert, sind daher der dritte Geschwindigkeitsschwellenwert SW3 und der vierte Geschwindigkeitsschwellenwert SW4 identisch gleich 30 km/h gewählt. Dies bedeutet, dass ein Wechseln in den aktivierten Zustand sowohl zu dem Zeitpunkt 21 aus dem eingeschränkt aktivierten Zustand als auch zu einem Zeitpunkt 25 aus dem temporär deaktivierten Zustand bei einem Unterschreiten desselben Geschwindigkeitswert erfolgt. Hierbei ist jedoch zu berücksichtigen, dass eine Ein- und Ausschaltlogik in der dargestellten Ausführungsform ein Versetzen in den aktivierten Zustand zu dem Zeitpunkt 25 erst zu einem Zeitpunkt bewirkt, an dem eine weitere Zeitspanne seit einem Zeitpunkt 26 verstrichen ist, die größer als ein zweites Zeitintervall Δt2 ist. Das eigentliche Unterschreiten des relevanten dritten Geschwindigkeitsschwellenwertes SW3 erfolgt bereits zu dem Zeitpunkt 26. Das erste Zeitintervall Δt1 und das zweite Zeitintervall Δt2 können unabhängig voneinander festgelegt werden. In den dargestellten Ausführungsformen sind sie identisch zu einer Minute festgelegt.

Die einzelnen unterschiedlichen Merkmale der unterschiedlichen Ausführungsformen können beliebig miteinander kombiniert werden, um die Erfindung auszuführen. Die dargestellten Ausführungsformen stellen somit lediglich Ausführungsbeispiele dar. Beispielsweise kann der dritte Geschwindigkeitsschwellenwert SW3 größer oder kleiner als der vierte Geschwindigkeitsschwellenwert SW4 gewählt werden. Im ersten Fall versetzt die Ein- und Ausschaltlogik das Parklenkassistenzsystem von dem temporär aktivierten Zustand in den eingeschränkt aktivierten Zustand, im zweiten Fall in den aktivierten Zustand. Ebenso sind Ausführungsformen realisierbar, bei denen nur der vierte Geschwindigkeitsschwellenwert SW4 , nicht jedoch der dritte Geschwindigkeitsschwellenwert SW3 existiert. Aus dem temporär deaktivierten Zustand wird bei dieser Ausführungsform direkt oder nach einem Verstreichen einer weiteren Zeitspanne seit dem Unterschreiten des vierten Geschwindigkeitsschwellenwerts SW4, die größer als das zweite Zeitintervall Δt2 ist, in den eingeschränkt aktivierten Zustand gewechselt.

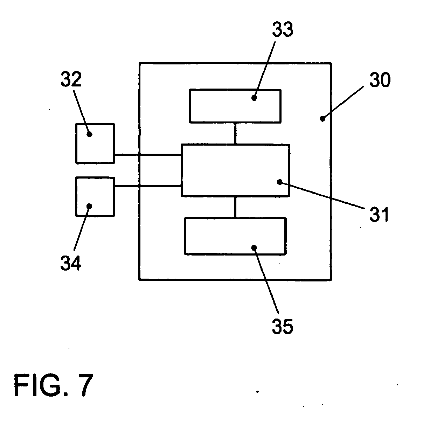

In Fig. 7 ist ein Parklenkassistenzsystem 30 dargestellt. Das Parklenkassistenzsystem 30 umfasst eine Ein- und Ausschaltlogik 31. Die Ein- und Ausschaltlogik 31 ist mit einem Bedienelement 32 gekoppelt. Ein von dem Bedienelement 32 verursachtes Bediensignal kann von der Ein- und Ausschaltlogik 31 ausgewertet werden, um eine Steuerung 33 und hierüber das Parklenkassistenzsystem 30 in einen aktivierten Zustand zu versetzen. Die Ein- und Ausschaltlogik 31 ist ferner mit einem Geschwindigkeitssensor 34 gekoppelt, von dem die Ein- und Ausschaltlogik 31 ein Geschwindigkeitssignal empfängt, das einen Geschwindigkeitswert des Fahrzeugs repräsentiert. In einer Speichereinheit 35 sind mindestens ein erster Geschwindigkeitsschwellenwert und ein zweiter Geschwindigkeitsschwellenwert abgelegt. Die Ein- und Ausschaltlogik 31 ist so ausgestaltet, dass sie bei einem Überschreiten des zweiten Geschwindigkeitsschwellenwertes durch den Geschwindigkeitswert des Kraftfahrzeugs die Steuerung 33 des Parklenkassistenzsystems 30 dazu veranlasst, das Parklenkassistenzsystem in einen temporär deaktivierten Zustand zu versetzen. Überschreitet der Geschwindigkeitswert den ersten Geschwindigkeitsschwellenwert, so wird die Steuerung 33 veranlasst, das Parklenkassistenzsystem 30 zu deaktivieren. In der Speichereinheit 35 können weitere Geschwindigkeitsschwellenwerte abgelegt sein und die Ein- und Ausschaltlogik 31 so ausgestaltet sein, dass sie eine Ein- und Ausschaltfunktionalität gemäß einem der oben beschriebenen Ausführungsbeispiele oder einer anderen Kombination der einzelnen beschriebenen Merkmale umsetzt.

## Patentansprüche

1. Parklenkassistenzsystem (30) mit verbesserter Ein- und Ausschaltlogik (31), wobei das Parklenkassistenzsystem (30) einem Fahrer Assistenzfunktionen und/oder Dienste im Zusammenhang mit einem Ein- und/oder Ausparken eines Kraftfahrzeugs zur Verfügung stellt, umfassend die Ein- und Ausschaltlogik (31), die vorgesehen ist, in Abhängigkeit eines Signals eines Bedienelements (22) das Parklenkassistenzsystem (30) in einen aktivierten Zustand zu versetzen und in Abhängigkeit eines Geschwindigkeitswerts (v) des Kraftfahrzeugs und abhängig von einem vorgegebenen ersten Geschwindigkeitsschwellenwert (SW1) das Parklenkassistenzsystem (30) in einen deaktivierten Zustand zu versetzen,
**dadurch gekennzeichnet, dass**
ein vorgegebener zweiter Geschwindigkeitsschwellenwert (SW2) existiert, der geringer als der erste Geschwindigkeitsschwellenwert (SW1) ist, und die Ein- und Ausschaltlogik (31) ausgestaltet ist, das Parklenkassistenzsystem (30) in Abhängigkeit von einem Größenvergleich des Geschwindigkeitswerts (v) und des zweiten Geschwindigkeitsschwellenwerts (SW2) aus dem aktivierten Zustand in einen temporär deaktivierten Zustand oder aus dem temporär deaktivierten Zustand in den aktivierten Zustand zu versetzen.

2. Parklenkassistenzsystem (30) nach Anspruch 1, **dadurch gekennzeichnet, dass** ein vorgegebener dritter Geschwindigkeitsschwellenwert (SW3) existiert, der geringer als der zweite Geschwindigkeitsschellenwert (SW2) ist, und die Ein- und Ausschaltlogik (31) ausgestaltet ist, das Parklenkassistenzsystem (30) aus dem temporär deaktivierten Zustand in den aktivierten Zustand nur zu versetzen, wenn der Geschwindigkeitswert (v) auch kleiner als der dritte Geschwindigkeitsschwellenwert (SW3) ist.

3. Parklenkassistenzsystem (30) nach einem der genannten Ansprüche, **dadurch gekennzeichnet, dass** ein vorgegebener vierter Geschwindigkeitsschwellenwert (SW4) existiert, der geringer als der zweite Geschwindigkeitsschellenwert (SW2) ist, und die Ein- und Ausschaltlogik (31) ausgestaltet ist, das Parklenkassistenzsystem (30) aus dem aktivierten Zustand in einen eingeschränkt aktivierten Zustand zu versetzen, wenn der Geschwindigkeitswert (v) den vierten Geschwindigkeitsschwellenwert (SW4) erreicht oder überschreitet.

4. Parklenkassistenzsystem (30) nach einem der genannten Ansprüche, **dadurch gekennzeichnet, dass** ein vorgegebenes erstes Zeitintervall (Δt1) existiert und die Ein- und Ausschaltlogik (31) ausgestaltet ist, dass das Versetzen in den deaktivierten Zustand nur erfolgt, wenn der Geschwindigkeitswert (v) den ersten Geschwindigkeitsschwellenwert (SW1) während einer Zeitspanne überschreitet, die länger als das erste Zeitintervall (Δt1) ist.

5. Parklenkassistenzsystem (30) nach einem der genannten Ansprüche, **dadurch gekennzeichnet, dass** ein vorgegebenes zweites Zeitintervall (Δt2) existiert, und die Ein- und Ausschaltlogik (31) ausgestaltet ist, dass das Versetzen aus dem temporär deaktivierten Zustand in den aktivierten Zustand oder eingeschränkt aktivierten Zustand nur erfolgt, wenn der Geschwindigkeitswert (v) den zweiten Geschwindigkeitsschwellenwert (SW2) oder, sofern der dritte Geschwindigkeitsschwellenwert (SW3) existiert, auch der dritte Geschwindigkeitsschwellenwert (SW3) für eine zweiten Zeitspanne unterschreitet, die länger als das zweite Zeitintervall (Δt2) ist.

6. Verfahren zum Betreiben eines Parklenkassistenzsystem (30) mit einer Ein- und Ausschaltlogik (31), umfassend die Verfahrensschritte:
Erfassen eines Bediensignals und versetzen des Parklenkassistenzsystem (30) in einen aktivierten Zustand bei Empfang des Bediensignals,
Empfangen eines Geschwindigkeitssignals, das einen Geschwindigkeitswert eines Kraftfahrzeugs repräsentiert,
Vergleichen des Geschwindigkeitswerts mit einem vorgegebenen ersten Geschwindigkeitsschwellenwert (SW1) und versetzen des Parklenkassistenzsystem (30) in Abhängigkeit des Vergleichsergebnisses in einen deaktivierten Zustand,
**dadurch gekennzeichnet, dass**
ein vorgegebener zweiter Geschwindigkeitsschellenwert (SW2) existiert, der geringer als der erste Geschwindigkeitsschwellenwert (SW1) ist, und die Ein- und Ausschaltlogik mit dem Geschwindigkeitswert (v) und dem zweiten Geschwindigkeitsschwellenwert (SW2) einen Größenvergleich ausführt und das Parklenkassistenzsystem (30) in Abhängigkeit des Größenvergleichs aus dem aktivierten Zustand in einen temporär deaktivierten Zustand oder aus dem temporär deaktivierten Zustand in den aktivierten Zustand versetzt.

7. Verfahren nach Anspruch 6, **dadurch gekennzeichnet, dass** ein vorgegebener dritter Geschwindigkeitsschwellenwert (SW3) existiert, der geringer als der zweite Geschwindigkeitsschellenwert (SW2) ist, und die Ein- und Ausschaltlogik (31) den Geschwindigkeitswert (v) mit dem dritten Geschwindigkeitsschwellenwert (SW3) vergleicht und das Parklenkassistenzsystem (30) aus dem temporär deaktivierten Zustand in den aktivierten Zustand nur versetzt, wenn der Geschwindigkeitswert (v) auch kleiner als der dritte Geschwindigkeitsschwellenwert (SW3) ist.

8. Verfahren nach einem der Ansprüche 6 oder 7, **dadurch gekennzeichnet, dass** ein vorgegebener vierter Geschwindigkeitsschwellenwert (SW4) existiert, der geringer als der zweite Geschwindigkeitsschellenwert (SW2) ist, und die Ein- und Ausschaltlogik (31) den Geschwindigkeitswert (v) mit dem vierten Geschwindigkeitsschwellenwert (SW4) vergleicht und das Parklenkassistenzsystem (30) zu dem aktivierten Zustand in einen eingeschränkten aktivierten Zustand versetzt, wenn der Geschwindigkeitswert (v) den vierten Geschwindigkeitsschwellenwert (SW3) erreicht oder überschreitet.

9. Verfahren nach einem der Ansprüche 6 bis 8, **dadurch gekennzeichnet, dass** ein vorgegebenes erstes Zeitintervall (Δt1) existiert und die Ein- und Ausschaltlogik (31) eine Zeitspanne ermittelt, während der der Geschwindigkeitswert (v) den ersten Geschwindigkeitsschwellenwert (SW1) erreicht oder überschreitet, diese ermittelte Zeitspanne mit dem ersten Zeitintervall (Δt1) vergleicht und das Parklenkassistenzsystem (30) in den deaktivierten Zustand nur versetzt verfolgt, wenn der Geschwindigkeitswert (v) den ersten Geschwindigkeitsschwellenwert (SW1) während einer Zeitspanne erreicht oder überschreitet, die länger als das erste Zeitintervall (Δt1) ist.

10. Verfahren nach einem der Ansprüche 6 bis 9, **dadurch gekennzeichnet, dass** ein vorgegebenes zweites Zeitintervall (Δt2) existiert, und die Ein- und Ausschaltlogik (31) eine weitere Zeitspanne ermittelt, während der der Geschwindigkeitswert (v) den zweiten Geschwindigkeitsschwellenwert (SW2) oder, sofern der dritte Geschwindigkeitsschwellenwert (SW3) existiert, auch den dritte Geschwindigkeitsschwellenwert (SW3) unterschreitet, diese ermittelte weitere Zeitspanne mit dem zweiten Zeitintervall (Δt2) vergleicht und das Parklenkassistenzsystem (30) aus dem temporär deaktivierten Zustand in den aktivierten Zustand oder eingeschränkt aktivierten Zustand nur versetzt, wenn die ermittelte weitere Zeitspanne länger als das zweite Zeitintervall (Δt2) ist.

## Claims

1. Parking steering assistance system (30) with improved activation and deactivation logic (31), wherein the parking steering assistance system (30) provides a driver with assistance functions and/or services in conjunction with the operation of parking a motor vehicle or removing it from a parking space, comprising the activation and deactivation logic (31) which is provided for placing the parking steering assistance system (30) in an activated state as a function of a signal of an operator control element (22) and of placing the parking steering assistance system (30) in a deactivated state as a function of a speed value (v) of the motor vehicle and as a function of a predefined, first speed threshold value (SW1), **characterized in that**
there is a predefined second speed threshold value (SW2) which is lower than the first speed threshold value (SW1), and the activation and deactivation logic (31) is configured to change the parking steering assistance system (30) from the activated state into a temporarily deactivated state or from a temporarily deactivated state into the activated state as a function of a comparison of the magnitude of the speed value (v) and of the second speed value (SW2).

2. Parking steering assistance system (30) according to Claim 1, **characterized in that** there is a predefined third speed threshold value (SW3) which is lower than the second speed threshold value (SW2), and the activation and deactivation logic (31) is configured to change the parking steering assistance system (30) from the temporarily deactivated state into the activated state only if the speed value (v) is also smaller than the third speed threshold value (SW3).

3. Parking steering assistance system (30) according to one of the specified claims, **characterized in that** there is a predefined fourth speed threshold value (SW4) which is lower than the second speed threshold value (SW2), and the activation and deactivation logic (31) is configured to change the parking steering assistance system (30) from the activated state into a state which is activated to a limited degree if the speed value (v) reaches or exceeds the fourth speed threshold value (SW4).

4. Parking steering assistance system (30) according to one of the specified claims, **characterized in that** there is a predefined first time interval (Δt1), and the activation and deactivation logic (31) is configured in such a way that the change into the deactivated state takes place only if the speed value (v) exceeds the first speed threshold value (SW1) during a time period which is longer than the first time interval (Δt1).

5. Parking steering assistance system (30) according to one of the specified claims, **characterized in that** there is a predefined second time interval (Δt2) and the activation and deactivation logic (31) is configured in such a way that the change from the temporarily deactivated state into the activated state or state which is activated to a limited degree takes place only if the speed value (v) drops below the second speed threshold value (SW2) or, if the third speed threshold value (SW3) exists, also drops below the third speed threshold value (SW3) for a second time period which is longer than the second time interval (Δt2).

6. Method for operating a parking steering assistance system (30) with an activation and deactivation logic (31), comprising the method steps:
detection of an operator control signal and placing of the parking steering assistance system (30) in an activated state when the operator control signal is received,
reception of a speed signal which represents a speed value of a motor vehicle,
comparison of the speed value with a predefined first speed threshold value (SW1) and placing of the parking steering assistance system (30) in a deactivated state as a function of the comparison result,
**characterized in that**
there is a predefined second speed threshold value (SW2) which is lower than the first speed threshold value (SW1), and the activation and deactivation logic carries out a magnitude comparison with the speed value (v) and the second speed threshold value (SW2), and changes the parking steering assistance system (30) from the activated state into a temporarily deactivated state or from the temporarily deactivated state into the activated state as a function of the magnitude comparison.

7. Method according to Claim 6, **characterized in that** there is a predefined third speed threshold value (SW3) which is lower than the second speed threshold value (SW2), and the activation and deactivation logic (31) compares the speed value (v) with the third speed threshold value (SW3), and changes the parking steering assistance system (30) from the temporarily deactivated state into the activated state only if the speed value (v) is also lower than the third speed threshold value (SW3).

8. Method according to one of Claims 6 or 7, **characterized in that** there is a predefined fourth speed threshold value (SW4) which is lower than the second speed threshold value (SW2), and the activation and deactivation logic (31) compares the speed value (v) with the fourth speed threshold value (SW4) and changes the parking steering assistance system (30) from the activated state into a state which is activated to a limited degree if the speed value (v) reaches or exceeds the fourth speed threshold value (SW4).

9. Method according to one of Claims 6 to 8, **characterized in that** there is a predefined first time interval (Δt1), and the activation and deactivation logic (31) determines a time period during which the speed value (v) reaches or exceeds the first speed threshold value (SW1), compares this determined time period with the first time interval (Δt1) and places the parking steering assistance system (30) in the deactivated state only if the speed value (v) reaches or exceeds the first speed threshold value (SW1) during a time period which is longer than the first time interval (Δt1).

10. Method according to one of Claims 6 to 9, **characterized in that** there is predefined second time interval (Δt2), and the activation and deactivation logic (31) determines a further time period during which the speed value (v) drops below the second speed threshold value (SW2) or, if the third speed threshold value (SW3) exists, also drops below the third speed threshold value (SW3), compares this determined further time period with the second time interval (Δt2), and changes the parking steering assistance system (30) from the temporarily deactivated state into the activated state or state which is activated to a limited degree only if the determined further time period is longer than the second time interval (Δt2).

## Revendications

1. Système d'assistance au stationnement (30) muni d'une logique de mise en service et de mise hors service (31) améliorée, le système d'assistance au stationnement (30) mettant à la disposition d'un conducteur des fonctions d'assistance et/ou des services en relation avec le stationnement et/ou la sortie de stationnement d'un véhicule automobile, comprenant la logique de mise en service et de mise hors service (31) qui est prévue pour mettre le système d'assistance au stationnement (30) dans un état activé en fonction d'un signal d'un élément de commande (22) et pour mettre le système d'assistance au stationnement (30) dans un état désactivé en fonction d'une valeur de la vitesse (v) du véhicule automobile et en fonction d'une première valeur de seuil de vitesse (SW1) prédéfinie,
**caractérisé en ce**
**qu'**il existe une deuxième valeur de seuil de vitesse (SW2) prédéfinie qui est inférieure à la première valeur de seuil de vitesse (SW1) et en ce que la logique de mise en service et de mise hors service (31) est configurée pour amener le système d'assistance au stationnement (30) de l'état activé à un état temporairement désactivé ou de l'état temporairement désactivé à l'état activé en fonction d'une comparaison de grandeurs entre la valeur de la vitesse (v) et la deuxième valeur de seuil de vitesse (SW2).

2. Système d'assistance au stationnement (30) selon la revendication 1, **caractérisé en ce qu'**il existe une troisième valeur de seuil de vitesse (SW3) prédéfinie qui est inférieure à la deuxième valeur de seuil de vitesse (SW2) et **en ce que** la logique de mise en service et de mise hors service (31) est configurée pour n'amener le système d'assistance au stationnement (30) de l'état temporairement désactivé à l'état activé que lorsque la valeur de la vitesse (v) est également inférieure à la troisième valeur de seuil de vitesse (SW3).

3. Système d'assistance au stationnement (30) selon l'une des revendications précédentes, **caractérisé en ce qu'**il existe une quatrième valeur de seuil de vitesse (SW4) prédéfinie qui est inférieure à la deuxième valeur de seuil de vitesse (SW2) et **en ce que** la logique de mise en service et de mise hors service (31) est configurée pour amener le système d'assistance au stationnement (30) de l'état activé à un état activé avec restrictions lorsque la valeur de la vitesse (v) devient égale ou supérieure à la quatrième valeur de seuil de vitesse (SW4).

4. Système d'assistance au stationnement (30) selon l'une des revendications précédentes, **caractérisé en ce qu'**il existe un premier intervalle de temps (Δt1) prédéfini et **en ce que** la logique de mise en service et de mise hors service (31) est configurée pour que le passage à l'état désactivé n'ait lieu que lorsque la valeur de la vitesse (v) dépasse la première valeur de seuil de vitesse (SW1) pendant une période qui est plus longue que le premier intervalle de temps (Δt1).

5. Système d'assistance au stationnement (30) selon l'une des revendications précédentes, **caractérisé en ce qu'**il existe un deuxième intervalle de temps (Δt2) prédéfini et **en ce que** la logique de mise en service et de mise hors service (31) est configurée pour que le passage de l'état temporairement désactivé à l'état activé ou à l'état activé avec restrictions n'ait lieu que lorsque la valeur de la vitesse (v) devient inférieure à la deuxième valeur de seuil de vitesse (SW2) ou, sous réserve que la troisième valeur de seuil de vitesse (SW3) existe, devient également inférieure à la troisième valeur de seuil de vitesse (SW3) pendant une deuxième période qui est plus longue que le deuxième intervalle de temps (Δt2).

6. Procédé d'exploitation d'un système d'assistance au stationnement (30) muni d'une logique de mise en service et de mise hors service (31), comprenant les étapes suivantes :
détection d'un signal de commande et amenée du système d'assistance au stationnement (30) dans un état activé lors de la réception du signal de commande,
réception d'un signal de vitesse qui représente une valeur de la vitesse d'un véhicule automobile,
comparaison de la valeur de la vitesse avec une première valeur de seuil de vitesse (SW1) prédéfinie et amenée du système d'assistance au stationnement (30) dans un état désactivé en fonction du résultat de la comparaison,
**caractérisé en ce**
**qu'**il existe une deuxième valeur de seuil de vitesse (SW2) prédéfinie qui est inférieure à la première valeur de seuil de vitesse (SW1) et en ce que la logique de mise en service et de mise hors service effectue une comparaison de grandeurs entre la valeur de la vitesse (v) et la deuxième valeur de seuil de vitesse (SW2) et amène le système d'assistance au stationnement (30) de l'état activé à un état temporairement désactivé ou de l'état temporairement désactivé à l'état activé en fonction de la comparaison des grandeurs.

7. Procédé selon la revendication 6, **caractérisé en ce qu'**il existe une troisième valeur de seuil de vitesse (SW3) prédéfinie qui est inférieure à la deuxième valeur de seuil de vitesse (SW2) et **en ce que** la logique de mise en service et de mise hors service (31) compare la valeur de la vitesse (v) avec la troisième valeur de seuil de vitesse (SW3) et n'amène le système d'assistance au stationnement (30) de l'état temporairement désactivé à l'état activé que lorsque la valeur de la vitesse (v) est également inférieure à la troisième valeur de seuil de vitesse (SW3).

8. Procédé selon la revendication 6 ou 7, **caractérisé en ce qu'**il existe une quatrième valeur de seuil de vitesse (SW4) prédéfinie qui est inférieure à la deuxième valeur de seuil de vitesse (SW2) et **en ce que** la logique de mise en service et de mise hors service (31) compare la valeur de la vitesse (v) avec la quatrième valeur de seuil de vitesse (SW4) et amène le système d'assistance au stationnement (30) de l'état activé à un état activé avec restrictions lorsque la valeur de la vitesse (v) devient égale ou supérieure à la quatrième valeur de seuil de vitesse (SW4).

9. Procédé selon l'une des revendications 6 à 8, **caractérisé en ce qu'**il existe un premier intervalle de temps (Δt1) prédéfini et **en ce que** la logique de mise en service et de mise hors service (31) détermine une période pendant laquelle la valeur de la vitesse (v) atteint ou dépasse la première valeur de seuil de vitesse (SW1), compare cette période déterminée avec le premier intervalle de temps (Δt1) et n'amène le système d'assistance au stationnement (30) à l'état désactivé que lorsque la valeur de la vitesse (v) atteint ou dépasse la première valeur de seuil de vitesse (SW1) pendant une période qui est plus longue que le premier intervalle de temps (Δt1).

10. Procédé selon l'une des revendications 6 à 9, **caractérisé en ce qu'**il existe un deuxième intervalle de temps (Δt2) prédéfini et **en ce que** la logique de mise en service et de mise hors service (31) détermine une autre période pendant laquelle la valeur de la vitesse (v) devient inférieure à la deuxième valeur de seuil de vitesse (SW2) ou, sous réserve que la troisième valeur de seuil de vitesse (SW3) existe, devient également inférieure à la troisième valeur de seuil de vitesse (SW3), compare cette autre période déterminée avec le deuxième intervalle de temps (Δt2) et n'amène le système d'assistance au stationnement (30) de l'état temporairement désactivé à l'état activé ou à l'état activé avec restrictions que lorsque l'autre période déterminée est plus longue que le deuxième intervalle de temps (Δt2).
